# EUROPEAN PATENT SPECIFICATION

(11) **EP 4 334 685 B1**
(45) Date of publication and mention of the grant of the patent: **28.01.2026**
(21) Application number: 22727852.0
(22) Date of filing: 04.05.2022
(51) Int. Cl.: G01D 5/353

(54) **COUPLED-CORE OPTICAL FIBER WITH FIBER BRAGG GRATING, METHOD AND SENSING DEVICE**
OPTISCHE FASER MIT GEKOPPELTEM KERN MIT FASER-BRAGG-GITTER, METHOD UND ABTASTVORRICHTUNG
FIBRE OPTIQUE À NOYAU COUPLÉ AVEC RÉSEAU DE BRAGG, PROCÉDÉ ET DISPOSITIF DE DÉTECTION

(30) Priority: 04.05.2021 EP 21382402
(43) Date of publication of application: 13.03.2024
(73) Proprietor: Universidad Del Pais Vasco Euskal Herriko Unibertsitatea, 48940 Leioa (Vizcaya) (ES); Universitat Politecnica de Valencia, 46022, Valencia (ES)
(72) Inventor: VILLATORO BERNARDO, Agustín Joel, 48940 Leioa, Vizcaya (ES); SALES MAICAS, Salvador, 46022 Valencia (ES); MADRIGAL MADRIGAL, Javier, 46022 Valencia (ES)
(74) Representative: Balder IP Law, S.L.
(86) International application number: PCT/EP2022/062066
(87) International publication number: WO 2022/233983

(56) References cited:
- CN-A- 111 121 837
- CN-A- 111 121 838
- YAKUSHIN SERGEY S. ET AL: "A study of bending effect on the femtosecond-pulse inscribed fiber Bragg gratings in a dual-core fiber", OPTICAL FIBER TECHNOLOGY, vol. 43, July 2018 (2018-07-01), AMSTERDAM, NL, pages 101 - 105, XP055842589, ISSN: 1068-5200, DOI: 10.1016/j.yofte.2018.04.001

## Description

### TECHNICAL FIELD

The present disclosure relates to the field of optical fibers. More particularly, the present disclosure relates to optical fibers having fiber Bragg gratings, sensing devices using the same, and methods for providing and using said fibers and devices.

### STATE OF THE ART

Sensors based on fiber Bragg gratings (FBGs) are widely used in different technical fields and sectors. The FBG technology is well established, mature and commercially available.

An FBG reflects a narrow peak centered in the so-called Bragg wavelength (λ_{B}). The position of λ_{B} changes when the FBG is subjected to strain, or to any phenomenon that can be converted to strain, as for example, pressure, force, vibrations, etc. The position of λ_{B} also changes with temperature.

In a sensor based on FBG, the position of λ_{B} is monitored and correlated with the measurand. To do so, a broadband light source and a high-resolution spectrometer or a tunable laser and a suitable photodetector are necessary. These interrogation systems are in general costly. Consequently, a sensor based on FBG tends to be expensive.

As FBGs are sensitive to temperature, a mechanism to compensate the effect of temperature or a reference temperature sensor is necessary when FBGs are used as sensors. In patent document US-7512291-B2, changes in the position of λ_{B} can be converted to intensity changes by means of edge filters, interferometers or similar devices placed before a photodetector. However, the linear section of wavelength filters is limited, thus not any FBGs can be interrogated with filters.

In S. S. Yakushin et al., "A study of bending effect on the femtosecond-pulse inscribed fiber Bragg gratings in a dual-core fiber," Optical Fiber Technology 43 (2018) 101-105, FBGs can be inscribed in a polarization-maintaining dual core fiber. Each individual core and, thus, each individual FBG is interrogated.

Patent document CN-111121837-A describes a dual-core optical fiber Mach-Zehnder interferometer, whereas patent document CN-111121838-A describes dual-core optical fiber Michelson interferometers. Although the interferometers have similarities with the devices of the present disclosure, they cannot be used for sensing.

FBGs can also be inscribed in a multicore fiber (MCF); this means an optical fiber with multiple cores in a common cladding. In these fibers, expensive fan-in/out devices are required to retrieve the information of each core or grating.

### DESCRIPTION OF THE INVENTION

A first aspect of the disclosure relates to an optical fiber comprising: a first optical fiber and a second optical fiber; the first optical fiber comprising a core extending between ends of the first optical fiber, and being a single mode fiber (SMF); the second optical fiber comprising a first core extending between first and second ends of the second optical fiber, and a second core extending between the first and second ends; the second optical fiber being a two coupled core fiber in which the second core is apart from the first core such that there is optical coupling between the first and second cores; the second optical fiber being connected to the first optical fiber at the first end such that the first core is connected with the core of the first optical fiber and the second core not being connected with any core of the first optical fiber; the first core is at a central axis of the second optical fiber, i.e. the central axis of the first core coincides with the central axis of the second optical fiber; and the first and second cores each comprising a fiber Bragg grating having a same reflection wavelength, the two fiber Bragg gratings extending a same length and being positioned at a same distance from the first end.

The optical fiber, which includes the first and second optical fibers, enables the interrogation of the two FBGs in a cost-effective manner. To this end, the second optical fiber is arranged as two coupled core fiber, i.e. TCCF, whereby light can be coupled from one core to the other. Additionally, the two FBGs share the reflection wavelength, this means that the FBGs are equal and can potentially be inscribed at once in the form of a single FBG that is produced in the two cores of the second optical fiber.

The interrogation is conducted by way of excitation of the fundamental mode of the first optical fiber, which is an SMF, with a light source that, in some embodiments, is also comprised in the optical fiber. The light in the first optical fiber propagates and both gets into the first core of the second optical fiber and couples into the second core of the second optical fiber. Accordingly, the light propagates in the first and second cores thereby interrogating the FBGs.

Further, owing to the arrangement of the optical fiber, the same can be used as a sensing device. Particularly, with the optical fiber it is possible to measure forces applied thereto, pressures applied thereto, and/or strains that the optical fiber is subjected to.

The capacity of the optical fiber to be used as a sensing device is because the reflectivity of the FBGs varies depending on how at least the second optical fiber bends in terms of both bending direction and bending degree, namely, how much it has been bent. Measurement of changes in reflectivity is faster than the measurement of changes in wavelength of the peak reflected.

Besides, the reflectivity of the FBGs does not depend upon the temperature of the second optical fiber.

The optical fiber is simple and can be manufactured in a cost-effective manner. In this sense, each core of the second optical fiber preferably comprises a single fiber Bragg grating, i.e. there is only one FBG in each core of the second optical fiber.

In some embodiments, the second optical fiber is not coupled with any optical fiber at the second end.

The second end may remain free from connections to other optical fibers so that it may be used for measurement of forces, pressures and/or strains when the second optical fiber is bent.

In some embodiments, the first and second cores are parallel to each other.

In this way, the determination of the physical magnitudes when the optical fiber is used as sensing device is more accurate since the changes of the reflectivity of the FBGs are better characterized.

In some embodiments, the first core and the core of the first optical fiber are parallel to each other.

In this way, the coupling of light from the first optical fiber to the second optical fiber for interrogation of the FBGs is maximal.

In some embodiments, a distance from a central axis of the second core to a central axis of the first core is equal to or less than 15 µm and is equal to or greater than 10 µm.

The optical coupling of the two cores is enhanced in this manner, thereby improving the measurements obtained from the reflectivity of the FBGs.

In some embodiments, the first and second cores are equal, i.e. they are identical; this means that the cores are made of the same material and have the same dimensions and geometry.

In this way, the determination of the physical magnitudes when the optical fiber is used as sensing device is more accurate since the changes of the FBGs reflectivity are better characterized.

In some embodiments, the core of the first optical fiber is at a central axis of the first optical fiber, i.e. the central axis of the core coincides with the central axis of the first optical fiber.

The arrangement of cores at the central axes of the respective optical fibers further eases the manufacturing of the optical fiber since the first and second optical fibers thereof can be spliced together with splicing machines known in the art and they may even be spliced together in an automated manner.

Also, in this way, the coupling of light from the first optical fiber to the second optical fiber for interrogation of the FBGs is maximal.

In some embodiments, the optical fiber further comprises a photodetector.

The reflectivity of the FBGs can be detected and measured with the photodetector, in this way the measurement of the reflectivity can be used for determination of one or more of the physical magnitudes described above.

Furthermore, changes in temperature do not alter the reflectivity of the FBGs, hence the optical fiber preferably does not comprise any temperature compensation mechanism or a temperature sensor for reference temperature measurements.

In some embodiments, the optical fiber does not comprise any one of: an optical spectrometer, and an optical spectrum analyzer.
the optical fiber preferably does not comprise a spectrometer or an optical spectrum analyzer so that the optical fiber can be simpler and produced at a lower cost than other optical fiber comprising an optical spectrometer and/or an optical spectrum analyzer.

In some embodiments, the optical fiber further comprises a light source coupled such that light reflected by the fiber Bragg gratings arrives at a light receiver, e.g. a photodetector, an optical spectrometer, etc.

In some embodiments, the optical fiber does not comprise any one of a light polarizing device, e.g. a polarizer, and a polarization-maintaining device, e.g. the first optical fiber is not a single mode polarization-maintaining fiber but rather a conventional single mode fiber.

Polarization of the light does not have to be maintained in the optical fiber, thereby making the optical fiber simpler and/or more cost-effective.

In some embodiments, the first optical fiber comprises a single core (the core) and the second optical fiber comprises two single cores (the first and second cores).

In some embodiments, each core of the second optical fiber comprises a single fiber Bragg grating.

A second aspect of the disclosure relates to a sensor for measuring at least one of force, pressure, and strain, the sensor comprising the optical fiber of the first aspect of the disclosure.

A third aspect of the disclosure relates to a method comprising: arranging a first optical fiber comprising a core extending between ends of the first optical fiber, and being a single mode fiber; arranging a second optical fiber comprising a first core extending between first and second ends of the second optical fiber, and a second core extending between the first and second ends; splicing the second optical fiber to the first optical fiber at the first end such that the first core is connected with the core of the first optical fiber, thereby providing a continuous optical fiber. Further, the second optical fiber is a two coupled core fiber in which the second core is apart from the first core such that there is optical coupling between the first and second cores; the second core is not connected with any core of the first optical fiber; the first core is at a central axis of the first optical fiber; and the first and second cores each comprise a fiber Bragg grating having a same reflection wavelength, the two fiber Bragg gratings extending a same length and being positioned at a same distance from the first end.

The method enables the provision of a cost-effective continuous optical fiber that incorporates two FBGs that can be interrogated through an SMF with a single light source. The reflectivity of the FBGs can be used for sensing purposes.

Moreover, the optical fiber provided in this manner does not require fan-in and/or fan-out devices for the interrogation of and/or retrieval of information from the FBGs.

In some embodiments, the method further comprises inscribing the two fiber Bragg gratings in the first and second cores at a same time.

A single FBG may be inscribed to form the FBG in each of the first and second cores, thereby making the production of the optical fiber simpler, more cost-effective and less prone to manufacturing errors since the characteristics and positioning of only one FBG need to be controlled.

In some embodiments, the method further comprises exciting the first optical fiber with a fundamental mode thereof, thereby exciting modes in the first and second cores for interrogation of the respective fiber Bragg gratings. The light can be provided by a light source such as a superluminiscent diode (i.e. SLED) or a laser, including a tunable laser.

In some embodiments, the method further comprises measuring the reflectivity of the two fiber Bragg gratings with a photodetector.

In some embodiments, the method further comprises, based on the measured reflectivity, determining at least one of: force or pressure at least applied to the second optical fiber; and strain that at least the second optical fiber is subjected to.

The reflectivity varies depending on the aforesaid physical magnitudes. Hence, upon establishing the wavelength, one or more of said physical magnitudes can be determined.

In some embodiments, the method further comprises bending the second optical fiber, e.g. a portion thereof. In some of these embodiments, the second optical fiber is bent such that a portion thereof at least moves along a direction defined by a start point and an end point, the start point being an intersection of a central axis of the second core with the second end, and the end point being an intersection of a central axis of the first core with the second end.

Depending on the direction along which the optical fiber is bent, the reflectivity of the FBGs changes more or less. For example, a considerable reduction in reflectivity is measured when the optical fiber is bent such that the movement thereof at least has a component according to the direction defined by the start and end points. This can advantageously be used for measuring certain strains on the optical fiber.

In some embodiments, the continuous optical fiber is the optical fiber of the first aspect of the disclosure.

A fourth aspect of the present disclosure relates to the use of the optical fiber of the first aspect of the disclosure in a sensor for measuring at least one of force, pressure, and strain.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 diagrammatically shows an optical fiber in accordance with embodiments.
Figure 2 shows a cross-section of an optical fiber in accordance with embodiments.
Figures 3 and 4 show changes in reflectivity of the FBGs in optical fibers in accordance with embodiments.
Figure 5 shows change in reflectivity over an initial reflectivity of the FBGs versus bending in optical fibers in accordance with embodiments.
Figure 6 shows variation of the Bragg wavelength λ_{B} with temperature in optical fibers in accordance with embodiments; the FBG reflectivity is not altered.
Figures 7A and 7B respectively show detected voltage as a function of time when a TCCF oscillates between the directions of Figures 3 and 4, and a Fast Fourier Transform, FFT, of the detected voltage.
Figure 8 diagrammatically shows a sensor in accordance with embodiments.

### DESCRIPTION OF WAYS OF CARRYING OUT THE INVENTION

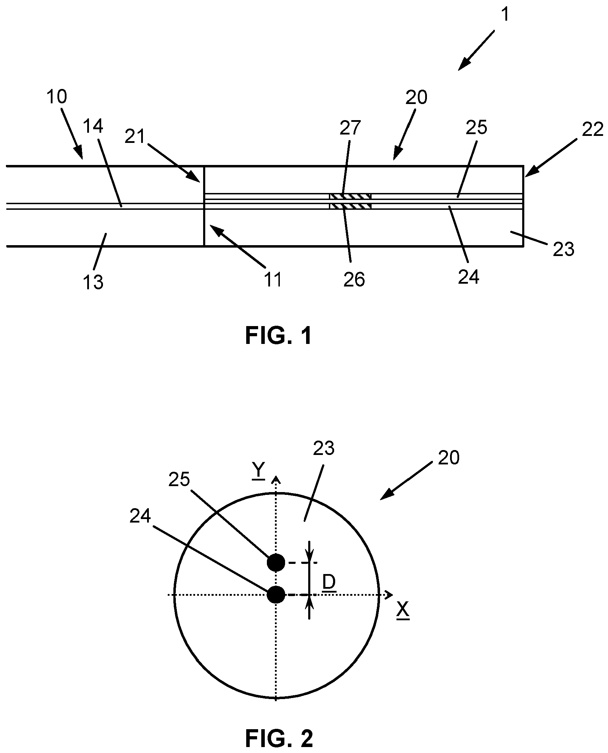

Figure 1 diagrammatically shows an optical fiber 1 in accordance with embodiments.

The optical fiber 1 is a continuous optical fiber resulting from the connection, preferably by way of splicing, of a first optical fiber 10 and a second optical fiber 20. In this sense, the second optical fiber 20 is connected at a first end 21 thereof with an end 11 of the first optical fiber 10.

The first optical fiber 10 is an SMF comprising a single core 14 within a cladding 13. The second optical fiber 20 is a TCCF, and comprises a first core 24 and a second core 25 within a cladding 23. In some preferred embodiments, the first and second cores 24, 25 are identical, namely they have the same structural features and characteristics, i.e. the cores 24, 25 are identical aside from manufacturing tolerances.

Each of the first and second cores 24, 25 comprises a respective fiber Bragg grating 26, 27. The two FBGs 26, 27 are arranged at a same distance from the first end 21, and also from the second end 22, which is not necessarily flat, since the two FBGs 26, 27 feature a same length in the respective cores 24, 25.

As it can be seen, the core 14 of the first optical fiber 10 is connected to the first core 24 of the second optical fiber 20, whereas the second core 25 is not connected to any core of the first optical fiber 10. Notwithstanding, the separation between the first and second cores 24, 25 is such that there is optical coupling between the two cores 24, 25.

The first core 24 is centrally arranged in the second optical fiber 20, i.e. a central axis of the first core 24 coincides with a central axis of the second optical fiber 20 (as seen in Figure 2 as well). The first and second cores 24, 25 are preferably parallel to each other. The core 14 of the first core 24 is preferably parallel to the core 14 of the first optical fiber 10, which is preferably also centrally arranged in the first optical fiber 10.

Figure 2 shows a cross-section of an optical fiber in accordance with embodiments. With reference to the description of the embodiments of Figure 1, the cross-section represented corresponds to the second optical fiber 20, that is, the TCCF. A first core 24 that is to be connected to the core of an SMF is preferably at a geometric center of the cross-section and the center of the second core 25 is separated from the center of the first core 24 by a distance D.

In some embodiments, the first and second cores 24, 25 have a diameter between 6 and 10 µm, preferably between 7 and 9 µm, and more preferably is 8 µm. In these embodiments, the distance D is between 12 and 18 µm, preferably between 13,5 and 16,5 µm, and more preferably is 15 µm. The endpoints of the ranges are also part of said ranges.

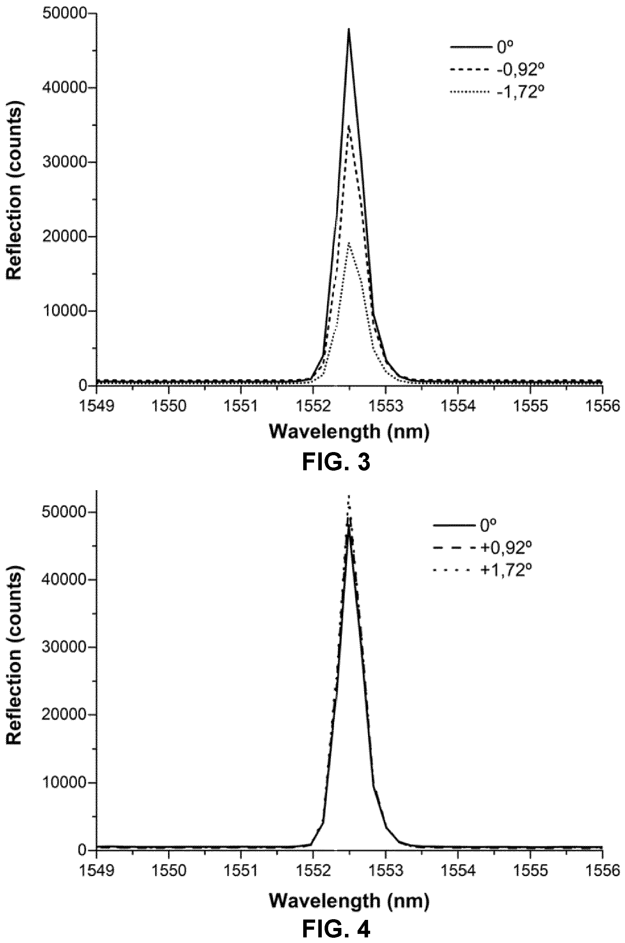

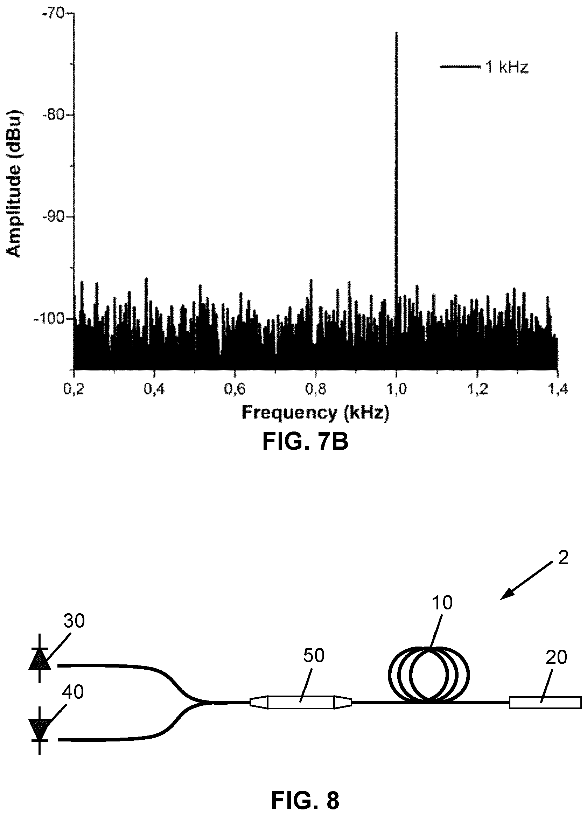

In Figure 3 there is shown the changes in reflectivity of the FBGs when the optical fiber comprising them is bent in a certain manner. The FBGs in this example and in the next examples has a Bragg wavelength of 1552,5 nm, but it will be noted that FBGs with other Bragg wavelengths are possible too without departing from the scope of the present disclosure. In this sense, in some embodiments, the optical fibers and the fiber Bragg gratings have a wavelength of operation in the range of 1260 nm to 1625 nm, preferably between 1500 nm and 1600 nm; in some other embodiments, the wavelength of operation is in the range of 780 to 970 nm, preferably between 800 nm and 900 nm. As it will be noted, other devices that are part of the optical fiber (or a sensor comprising the same) or are couplable thereto, such as a light source and/or a light receiver (as shown in the embodiment of Figure 8) also have a same wavelength of operation.

As it can be appreciated, there is a reduction in FBG reflectivity when the optical fiber is bent such that there is at least a negative vertical component when observed with reference to the cross-section shown in Figure 2. Taking Figure 2 into account, when a portion (namely a segment) of the optical fiber comprising the FBGs is moved towards the -Y (i.e. negative Y axis), the FBGs reflectivity decreases: at 0° bending (that is to say, when there is no bending) the reflectivity (solid line) is greater than the reflectivity (dashed line) at -0,92° bending, and much greater than the reflectivity (dotted line) at -1,72° bending.

In Figure 4 there is shown a graph similar to that in Figure 3 but when the bending of the optical fiber has at least a positive vertical component when observed with reference to the cross-section shown in Figure 2.

For same angle bending as in Figure 3 but in the opposite direction, the FBG reflectivity changes little in comparison with a fiber that is not bent; and the reflectivity measured changes much less than the reflectivity measured for a fiber bent as explained with reference to Figure 3.

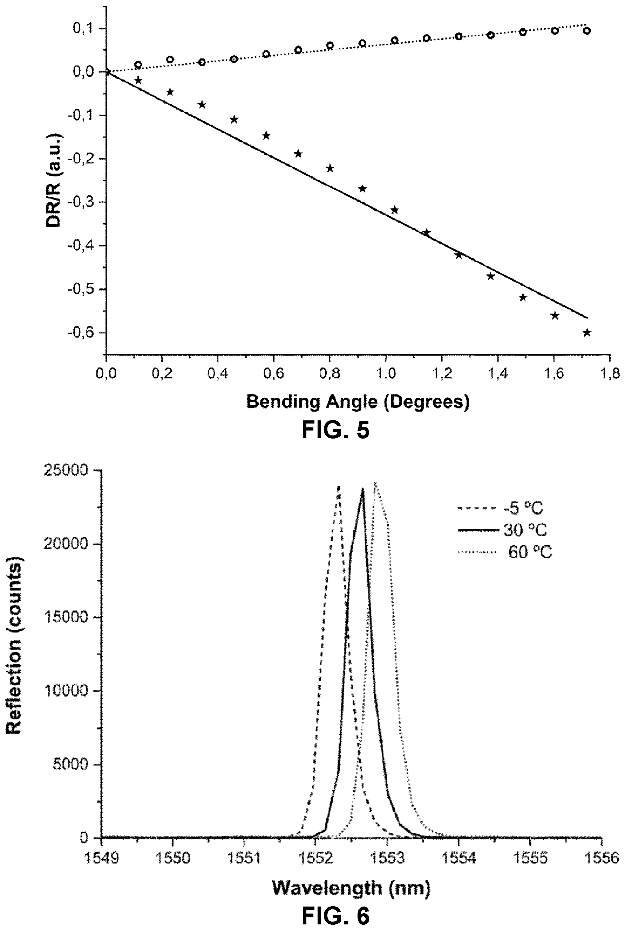

The variations in FBG reflectivity for the two different bending directions can be appreciated more easily in Figure 5.

Figure 5 shows change in reflectivity of the FBG versus bending in optical fibers in accordance with embodiments.

The bending angle is represented in the X axis and the variation in reflectivity is represented in the Y axis. Markers have been illustrated in the graph to show actual measurements, and the lines are an approximated trend of the change in reflectivity.

As it can be observed, the change in reflectivity is equal to or below 0,1, i.e. 10%, for positive bending angles of up to 1,7°, whereas the change in reflectivity is up to 0,6, i.e. 60%, for negative bending angles of up to (negative) 1,7°.

Figure 6 shows variation of the Bragg wavelength with temperature in optical fibers in accordance with embodiments.

The Bragg wavelength by the FBGs has a different values at different temperatures, thereby making possible to use the optical fiber for sensing temperature. For a temperature of 30°C, the Bragg wavelength (solid line) is at 1552,6 nm; for a temperature of -5 °C, the Bragg wavelength (dashed line) is at 1552,4 nm; and for a temperature of 60 °C, the Bragg wavelength (dotted line) is at 1552,9 nm.

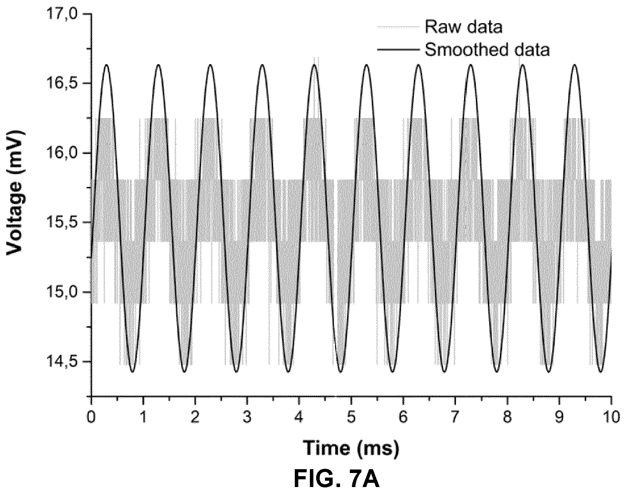

Figures 7A and 7B respectively show detected voltage as a function of time when a segment of a TCCF oscillates between the directions of Figures 3 and 4, and a Fast Fourier Transform, FFT, of the detected voltage.

The detected voltage results from measuring the reflectivity by the FBGs when a segment of a TCCF (e.g. the second optical fiber 20 of Figures 1 and 2) oscillates along the Y direction represented in Figure 2. This means that a free end of said fiber goes between positive and negative bending angles back and forth. Such vibrating behavior of the fiber can be determined based on the detected voltage, or the FFT applied thereto, which shows a peak within the spectrum. In this example, the peak is at approximately 1 kHz. Accordingly, the TCCF with Bragg gratings inscribed in the cores thereof and the optical fiber comprising the TCCF can be used for measuring vibrations.

Figure 8 diagrammatically shows a sensor 2 in accordance with embodiments.

The sensor 2 comprises a light source 30 such as an SLED or a laser. The sensor 2 comprises a light receiver 40 such as a photodiode. The sensor 2 comprises a fiber optic circulator or coupler 50 connected with both the light source 30 and the light receiver 40, and also connected with the single mode fiber 10 coupled with the TCCF 20.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first optical fiber could as well be named second optical fiber, and the second optical fiber could be named first optical fiber without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An optical fiber (1) comprising: a first optical fiber (10) and a second optical fiber (20); the first optical fiber (10) comprising a core (14) extending between ends of the first optical fiber (10), and being a single mode fiber; the second optical fiber (20) comprising first and second cores (24,25) each extending between first and second ends (21,22) of the second optical fiber (20); the second optical fiber (20) being connected to the first optical fiber (10) at the first end (21) such that the first core (24) is connected with the core (14) of the first optical fiber (10); the first core (24) is at a central axis of the second optical fiber (20); the second core (25) not being connected with any core (14) of the first optical fiber (10); and the first and second cores (24,25) each comprising a fiber Bragg grating (26,27) having a same reflection wavelength, and the two fiber Bragg gratings (26,27) extending a same length and being positioned at a same distance from the first end (21); **characterized in that:** the second optical fiber (20) is a two coupled core fiber in which the second core (25) is apart from the first core (24) such that there is optical coupling between the first and second cores (24,25).

2. The optical fiber (1) of claim 1, further comprising a photodetector configured to measure reflectivity of the two fiber Bragg gratings (26,27).

3. The optical fiber (1) of any one of the preceding claims, wherein the second optical fiber (20) is not coupled with any optical fiber at the second end (22).

4. The optical fiber (1) of any one of the preceding claims, wherein the first and second cores (24,25) are parallel to each other, and a distance from a central axis of the second core (25) to a central axis of the first core (24) is equal to or less than 15 µm and is equal to or greater than 10 µm.

5. The optical fiber (1) of any one of the preceding claims, wherein the first and second cores (24,25) are identical.

6. The optical fiber (1) of any one of the preceding claims, wherein the core (14) of the first optical fiber (10) is at a central axis of the first optical fiber.

7. The optical fiber (1) of any one of the preceding claims, wherein the optical fiber (1) does not comprise any one of: an optical spectrometer, and an optical spectrum analyzer.

8. A sensor (2) for measuring at least one of force, pressure, strain and temperature, the sensor comprising the optical fiber (1) of any one of claims 1-7.

9. A method comprising: arranging a first optical fiber (10) comprising a core (14) extending between ends of the first optical fiber (10), and being a single mode fiber; arranging a second optical fiber (20) comprising first and second cores (24,25) each extending between first and second ends (21,22) of the second optical fiber (20); splicing the second optical fiber (20) to the first optical fiber (10) at the first end such that the first core (24) is connected with the core (14) of the first optical fiber (10), thereby providing a continuous optical fiber (1); the first core (24) is at a central axis of the first optical fiber (10); the second core (25) not being connected with any core (14) of the first optical fiber (10); and the first and second cores (24,25) each comprising a fiber Bragg grating (26,27) having a same reflection wavelength, and the two fiber Bragg gratings (26,27) extending a same length and being positioned at a same distance from the first end (21); **characterized in that:** the second optical fiber (20) is a two coupled core fiber in which the second core (25) is apart from the first core (24) such that there is optical coupling between the first and second cores (24,25).

10. The method of claim 9, further comprising exciting the first optical fiber (10) with a fundamental mode thereof, thereby exciting modes in the first and second cores (24,25) for interrogation of the respective fiber Bragg gratings (26,27).

11. The method of claim 10, further comprising measuring reflectivity of the two fiber Bragg gratings (26,27) with a photodetector.

12. The method of claim 11, further comprising, based on the reflectivity of the Bragg gratings, determining at least one of: force or pressure at least applied to the second optical fiber (20); and strain that at least the second optical fiber (20) is subjected to.

13. The method of any one of claims 9-12, further comprising: inscribing the two fiber Bragg gratings (26,27) in the first and second cores (24,25) at a same time.

14. The method of any one of claims 9-13, further comprising bending the second optical fiber (20).

15. The method of any one of claims 9-14, wherein the continuous optical fiber (1) is the optical fiber (1) of any one of claims 1-7.

## Patentansprüche

1. Optische Faser (1), umfassend: eine erste optische Faser (10) und eine zweite optische Faser (20); wobei die erste optische Faser (10) einen Kern (14) umfasst, der sich zwischen den Enden der ersten optischen Faser (10) erstreckt, und eine Single-Mode-Faser ist; wobei die zweite optische Faser (20) einen ersten und einen zweiten Kern (24, 25) umfasst, die sich jeweils zwischen einem ersten und einem zweiten Ende (21, 22) der zweiten optischen Faser (20) erstrecken; wobei die zweite optische Faser (20) mit der ersten optischen Faser (10) an dem ersten Ende (21) verbunden ist, so dass der erste Kern (24) mit dem Kern (14) der ersten optischen Faser (10) verbunden ist; wobei sich der erste Kern (24) auf einer Mittelachse der zweiten optischen Faser (20) befindet; wobei der zweite Kern (25) mit keinem Kern (14) der ersten optischen Faser (10) verbunden ist; und der erste und der zweite Kern (24, 25) jeweils ein Faser-Bragg-Gitter (26, 27) mit derselben Reflexionswellenlänge umfassen, wobei sich die beiden Faser-Bragg-Gitter (26, 27) über dieselbe Länge erstrecken und in demselben Abstand vom ersten Ende (21) positioniert sind; **dadurch gekennzeichnet, dass** die zweite optische Faser (20) eine Faser mit zwei gekoppelten Kernen ist, bei welcher der zweite Kern (25) vom ersten Kern (24) so beabstandet ist, dass eine optische Kopplung zwischen dem ersten und dem zweiten Kern (24, 25) besteht.

2. Optische Faser (1) nach Anspruch 1, ferner umfassend einen Fotodetektor, der so konfiguriert ist, dass er die Reflektivität der beiden Faser-Bragg-Gitter (26, 27) misst.

3. Optische Faser (1) nach einem der vorstehenden Ansprüche, wobei die zweite optische Faser (20) an dem zweiten Ende (22) mit keiner optischen Faser gekoppelt ist.

4. Optische Faser (1) nach einem der vorstehenden Ansprüche, wobei der erste und der zweite Kern (24, 25) parallel zueinander sind und der Abstand von einer Mittelachse des zweiten Kerns (25) zur Mittelachse des ersten Kerns (24) gleich oder kleiner als 15 µm und gleich oder größer als 10 µm ist.

5. Optische Faser (1) nach einem der vorstehenden Ansprüche, wobei der erste und der zweite Kern (24, 25) identisch sind.

6. Optische Faser (1) nach einem der vorstehenden Ansprüche, wobei sich der Kern (14) der ersten optischen Faser (10) auf einer Mittelachse der ersten optischen Faser befindet.

7. Optische Faser (1) nach einem der vorstehenden Ansprüche, wobei die optische Faser (1) weder ein optisches Spektrometer noch einen optischen Spektrumanalysator umfasst.

8. Sensor (2) zur Bestimmung mindestens einer der folgenden Größen: Kraft, Druck, Dehnung und Temperatur, wobei der Sensor die optische Faser (1) nach einem der Ansprüche 1 bis 7 umfasst.

9. Verfahren, umfassend: Anordnen einer ersten optischen Faser (10), umfassend einen Kern (14), der sich zwischen den Enden der ersten optischen Faser (10) erstreckt und eine Single-Mode-Faser ist; Anordnen einer zweiten optischen Faser (20), die einen ersten und einen zweiten Kern (24, 25) umfasst, die sich jeweils zwischen einem ersten und einem zweiten Ende (21, 22) der zweiten optischen Faser (20) erstrecken; Spleißen der zweiten optischen Faser (20) mit der ersten optischen Faser (10) am ersten Ende, so dass der erste Kern (24) mit dem Kern (14) der ersten optischen Faser (10) verbunden ist, wodurch eine kontinuierliche optische Faser (1) bereitgestellt wird; wobei sich der erste Kern (24) auf einer Mittelachse der ersten optischen Faser (10) befindet; wobei der zweite Kern (25) mit keinem Kern (14) der ersten optischen Faser (10) verbunden ist; und der erste und der zweite Kern (24, 25) jeweils ein Faser-Bragg-Gitter (26, 27) mit derselben Reflexionswellenlänge umfassen, und die beiden Faser-Bragg-Gitter (26, 27) sich über dieselbe Länge erstrecken und in demselben Abstand vom ersten Ende (21) positioniert sind; **dadurch gekennzeichnet, dass** die zweite optische Faser (20) eine doppelt gekoppelte Kernfaser ist, bei welcher der zweite Kern (25) vom ersten Kern (24) beabstandet ist, so dass eine optische Kopplung zwischen dem ersten und dem zweiten Kern (24, 25) besteht.

10. Verfahren nach Anspruch 9, ferner umfassend Anregen der ersten optischen Faser (10) mit einem Grundmode derselben, wodurch Modes im ersten und zweiten Kern (24, 25) für die Abfrage der jeweiligen Faser-Bragg-Gitter (26, 27) angeregt werden.

11. Verfahren nach Anspruch 10, ferner umfassend: Messen der Reflektivität der beiden Faser-Bragg-Gitter (26, 27) mit einem Fotodetektor.

12. Verfahren nach Anspruch 11, ferner umfassend Bestimmen mindestens eines der folgenden Parameter, basierend auf der Reflektivität der Bragg-Gitter: Kraft oder Druck, die mindestens auf die zweite optische Faser (20) ausgeübt werden; und Dehnung, der mindestens die zweite optische Faser (20) ausgesetzt ist.

13. Verfahren nach einem der Ansprüche 9 bis 12, ferner umfassend: gleichzeitiges Einschreiben der beiden Faser-Bragg-Gitter in den ersten und zweiten Kern (24, 25).

14. Verfahren nach einem der Ansprüche 9 bis 13, ferner umfassend Biegen der zweiten optischen Faser (20).

15. Verfahren nach einem der Ansprüche 9 bis 14, wobei die kontinuierliche optische Faser (1) die optische Faser (1) nach einem der Ansprüche 1 bis 7 ist.

## Revendications

1. Fibre optique (1) comprenant : une première fibre optique (10) et une deuxième fibre optique (20) ; la première fibre optique (10) comprenant une âme (14) s'étendant entre les extrémités de la première fibre optique (10), et qui est une fibre monomode ; la deuxième fibre optique (20) comprenant des première et deuxième âmes (24, 25) s'étendant chacune entre les première et deuxième extrémités (21, 22) de la deuxième fibre optique (20); la deuxième fibre optique (20) étant raccordée à la première fibre optique (10) à la première extrémité (21) de sorte que la première âme (24) soit raccordée à l'âme (14) de la première fibre optique (10) ; la première âme (24) est au niveau d'un axe central de la deuxième fibre optique (20) ; la seconde âme (25) n'étant raccordée à aucune âme (14) de la première fibre optique (10) ; et les première et deuxième âmes (24, 25) comprenant chacune un réseau de Bragg sur fibre (26, 27) ayant une même longueur d'onde de réflexion, et les deux réseaux de Bragg sur fibre (26, 27) s'étendant sur une même longueur et étant positionnés à une même distance de la première extrémité (21) ; **caractérisée en ce que** : la deuxième fibre optique (20) est une fibre à deux âmes couplées dans laquelle la deuxième âme (25) est séparée de la première âme (24) de sorte qu'il existe un couplage optique entre les première et deuxième âmes (24, 25).

2. Fibre optique (1) selon la revendication 1, comprenant en outre un photodétecteur configuré pour mesurer la réflectivité des deux réseaux de Bragg sur fibre (26, 27).

3. Fibre optique (1) selon l'une quelconque des revendications précédentes, dans laquelle la deuxième fibre optique (20) n'est raccordée à aucune fibre optique à la deuxième extrémité (22).

4. Fibre optique (1) selon l'une quelconque des revendications précédentes, dans laquelle les première et deuxième âmes (24, 25) sont parallèles l'une à l'autre, et une distance d'un axe central de la deuxième âme (25) à un axe central de la première âme (24) est égale ou inférieure à 15 µm et est égale ou supérieure à 10 µm.

5. Fibre optique (1) selon l'une quelconque des revendications précédentes, dans laquelle les première et deuxième âmes (24, 25) sont identiques.

6. Fibre optique (1) selon l'une quelconque des revendications précédentes, dans laquelle l'âme (14) de la première fibre optique (10) est au niveau d'un axe central de la première fibre optique.

7. Fibre optique (1) selon l'une quelconque des revendications précédentes, dans laquelle la fibre optique (1) ne comprend ni l'un ni l'autre parmi : un spectromètre optique, et un analyseur de spectre optique.

8. Capteur (2) pour la mesure d'au moins l'une parmi une force, une pression, une déformation et une température, le capteur comprenant la fibre optique (1) selon l'une quelconque des revendications 1 à 7.

9. Méthode comprenant : l'agencement d'une première fibre optique (10) comprenant une âme (14) s'étendant entre les extrémités de la première fibre optique (10), et qui est une fibre monomode ; l'agencement d'une deuxième fibre optique (20) comprenant des première et deuxième âmes (24, 25) s'étendant chacune entre les première et deuxième extrémités (21, 22) de la deuxième fibre optique (20) ; l'épissure de la deuxième fibre optique (20) avec la première fibre optique (10) à la première extrémité de sorte que la première âme (24) soit raccordée à l'âme (14) de la première fibre optique (10), ce qui fournit une fibre optique (1) continue ; la première âme (24) est au niveau d'un axe central de la première fibre optique (10) ; la seconde âme (25) n'étant raccordée à aucune âme (14) de la première fibre optique (10) ; et les première et deuxième âmes (24, 25) comprenant chacune un réseau de Bragg sur fibre (26, 27) ayant une même longueur d'onde de réflexion, et les deux réseaux de Bragg sur fibre (26, 27) s'étendant sur une même longueur et étant positionnés à une même distance de la première extrémité (21) ; **caractérisée en ce que** : la deuxième fibre optique (20) est une fibre à deux âmes couplées dans laquelle la deuxième âme (25) est séparée de la première âme (24) de sorte qu'il existe un couplage optique entre les première et deuxième âmes (24, 25).

10. Méthode selon la revendication 9, comprenant en outre l'excitation de la première fibre optique (10) avec un mode fondamental de celle-ci, ce qui excite des modes dans les première et deuxième âmes (24, 25) pour l'interrogation des réseaux de Bragg sur fibre (26, 27) respectifs.

11. Méthode selon la revendication 10, comprenant en outre la mesure de la réflectivité des deux réseaux de Bragg sur fibre (26, 27) avec un photodétecteur.

12. Méthode selon la revendication 11, comprenant en outre, sur la base de la réflectivité des réseaux de Bragg, la détermination d'au moins l'une parmi : une force ou une pression au moins appliquée à la deuxième fibre optique (20) ; et une déformation à laquelle au moins la deuxième fibre optique (20) est soumise.

13. Méthode selon l'une quelconque des revendications 9 à 12, comprenant en outre : la gravure des deux réseaux de Bragg sur fibre (26, 27) dans les première et deuxième âmes (24, 25) en même temps.

14. Méthode selon l'une quelconque des revendications 9 à 13, comprenant en outre le cintrage de la deuxième fibre optique (20).

15. Méthode selon l'une quelconque des revendications 9 à 14, dans laquelle la fibre optique (1) continue est la fibre optique (1) selon l'une quelconque des revendications 1 à 7.
